# EUROPÄISCHE PATENTSCHRIFT

(11) **EP 0 989 339 B1**
(45) Veröffentlichungstag und Bekanntmachung des Hinweises auf die Patenterteilung: **16.10.2002**
(21) Anmeldenummer: 99116480.7
(22) Anmeldetag: 23.08.1999
(51) Int. Cl.: F16H 61/22

(54) **Verriegelungseinrichtung für ein drehbares Sperrelement einer Wähleinrichtung**
Locking device for rotatable locking element of a shift device
Dispositif de verrouillage pour élément de verrouillage d'un dispositif de changement de vitesses

(30) Priorität: 26.09.1998 DE 19844279
(43) Veröffentlichungstag der Anmeldung: 29.03.2000
(73) Patentinhaber: Dr.Ing. h.c.F. Porsche Aktiengesellschaft, 70435 Stuttgart (DE)
(72) Erfinder: Sander, Edmund, 71229 Leonberg (DE)

(56) Entgegenhaltungen:
- WO-A-96/35064
- WO-A-98/40648

## Beschreibung

Die Erfindung betrifft eine Verriegelungseinrichtung für ein drehbares Sperrelement einer Wähleinrichtung, die einen Wählhebel aufweist.

Im Zusammenhang mit einer Schalteinrichtung für ein manuelles Schaltgetriebe ist es dem Oberbegriff des Anspruchs 1 entsprechend aus der WO 96/35064 bereits bekannt geworden, das Keylock-Sperrelement in einer vorgegebenen Position an der Schalteinrichtung zu sichern, indem eine gehäusefest gelagerte Blattfeder in eine langgestreckte Öffnung des Sperrelementes eingreift. An einem Schalthebel ist ein Betätigungselement für das Keylock-Sperrelement vorgesehen, das in einer bestimmten Position des Schalthebels in die Öffnung des Keylock-Sperrelementes eingreift und im weiteren auch bewegt. Gleichzeitig verdrängt das Betätigungselement die Blattfeder aus der langgestreckten Öffnung, so daß zur Betätigung des Keylock-Sperrelementes dieses nicht mehr verriegelt ist. Nachteilig ist, daß bei dieser Anordnung in der Nähe des Keylock-Sperrelementes eine Gehäusewandung oder ähnliches vorzusehen ist, an der die Biegefeder angeordnet werden kann.

Eine Keylock-Sperrvorrichtung allgemein, die zwei miteinander korrespondierende Sperrelemente aufweist, ist bereits aus der EP 0 580 970 A1 bekannt geworden.

Gegenüber diesem Stand der Technik ist es Aufgabe der Erfindung, eine Verriegelungseinrichtung für ein drehbares Sperrelement zu schaffen, das hinsichtlich seines baulichen Aufwandes verbessert ist.

Diese Aufgabe wird erfindungsgemäß mit den Merkmalen des Patentanspruches 1 gelöst. Erfindungsgemäß wird vorgeschlagen, die Biegefeder auf dem Sperrelement anzuordnen, wobei ein erstes Ende der Biegefeder an einem Lager des Sperrelementes ortsfest gelagert ist und ein zweites, freies Ende der Biegefeder auf einem Auflager aufliegt. Korrespondierend zum freien Ende der Biegefeder ist am Gehäuse der Wähleinrichtung an einer Drehachse des Sperrelementes ein Absatz vorgesehen, an dem sich das freie Ende der Biegefeder abstützt. Ein Betätigungselement des Wählhebels greift zur Entriegelung zwischen dem ortsfesten Lager und dem Auflager an und biegt dabei die Biegefeder durch, deren freies Ende dann nicht mehr in Eingriff mit dem gehäusefesten Absatz steht. Vorteilhafter Weise benötigt diese Verriegelungseinrichtung lediglich einen radial zur Drehachse vorgesehenen Absatz als gehäusefestes Widerlager. Damit kann das Sperrelement an einer beliebigen Stelle im Gehäuse angeordnet werden und benötigt keine Wandung oder ähnliches zur Aufnahme der Biegefeder.

Vorteilhafte Weiterbildungen der Erfindung sind in den Unteransprüchen beschrieben.

So wird vorgeschlagen, die Biegefeder an ihrem ortsfest gelagerten Ende mit einem Auge zu versehen und korrespondierend hierzu am Sperrelement einen Zapfen vorzusehen, auf den das Auge aufgeschoben werden kann. Damit ist der bauliche Aufwand weiter vermindert, da mit dieser Ausführung auf gesonderte Befestigungsmittel verzichtet werden kann.

Weiterhin wird vorgeschlagen, das freie Ende der Biegefeder abzuwinkeln und ein zweites Auflager für die Biegefeder vorzusehen. Das zweite Auflager für die Biegefeder ist hierbei vorzugsweise in der Nähe des ersten Auflagers, jedoch versetzt in Richtung des ortsfesten Lagers vorgesehen. Bei dieser Anordnung kann ferner das zweite Auflager die Feder leicht durchbiegen, so daß die Biegefeder unter Vorspannung und damit klapperfrei gehalten ist. Da bei dieser Anordnung die Biegefeder auf dem Sperrelement nicht radial zu dessen Drehachse angeordnet werden muß, ist der radiale Platzbedarf zur Anordnung der Biegefeder deutlich vermindert und das Sperrelement kann freier gestaltet werden.

Zur Betätigung der Verriegelungseinrichtung wird vorgeschlagen, hierzu einen Stift zu verwenden, der mit einer Entriegelungseinrichtung des Wählhebels verbunden ist. Zur Aufnahme dieses Stiftes kann am Sperrelement eine langgestreckte Öffnung vorgesehen sein, die sich im wesentlichen radial zum Sperrelement erstreckt. Eine Drehung des Sperrelementes ist damit nur möglich, wenn sich der Wählhebel in einer vorgegebenen Position befindet und die Entriegelungseinrichtung des Wählhebels bewegt wird.

Schließlich wird vorgeschlagen, die erfindungsgemäße Verriegelungseinrichtung für ein drehbares Sperrelement eine Keylock-Verriegelung zu verwenden.

Die Erfindung ist nachstehend anhand des in den Zeichnungen dargestellten Ausführungsbeispieles näher erläutert.

Es zeigen
- Fig. 1: eine Seitenansicht einer Wähleinrichtung mit einem drehbaren Sperrelement in der Grundstellung des Sperrelementes und
- Fig. 2: das Sperrelement in seiner entriegelten Stellung.

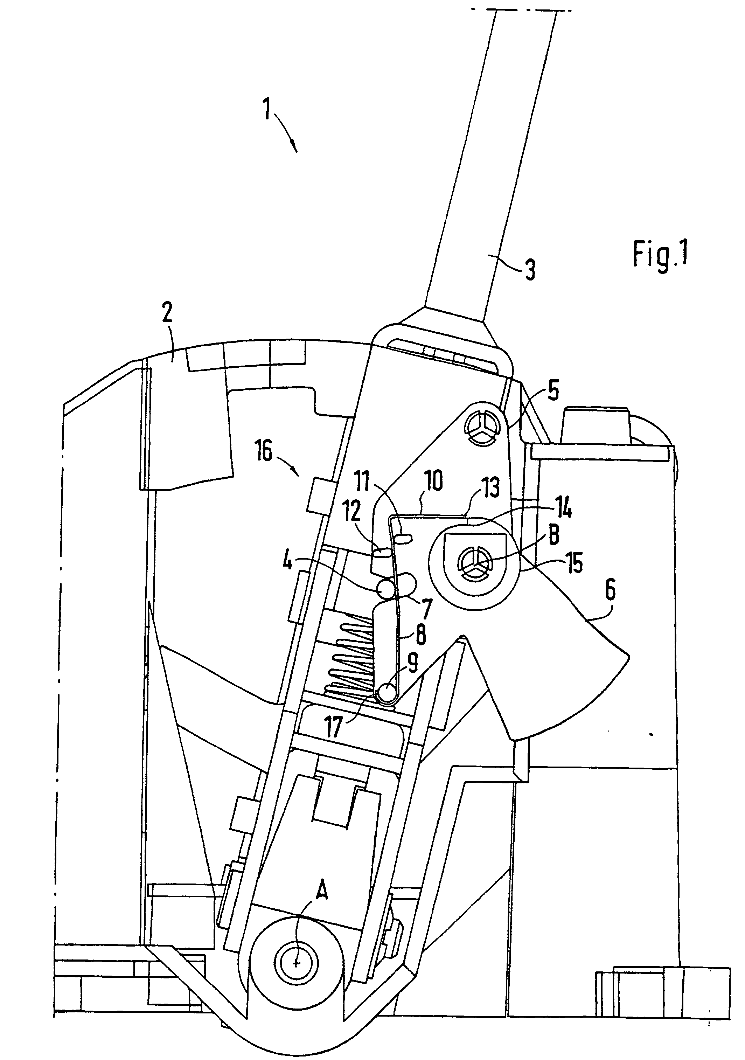

Fig. 1 zeigt eine Wähleinrichtung 1 mit einem Gehäuse 2 und einem im Gehäuse um eine Drehachse A schwenkbar gelagerten Wählhebel 3 innerhalb des Wählhebels 3 ist eine Sperreinrichtung vorgesehen, die den Wählhebel 3 in bestimmten Positionen gegenüber dem Gehäuse 2 verriegelt. Mit dieser Sperreinrichtung verbunden ist ein Stift 4. Im dargestellten Beispiel befindet sich der Wählhebel 3 in seiner Endposition P und die Sperreinrichtung des Wählhebels 3 ist im Sinne eines Entriegelns betätigt, d.h. der Stift 4 befindet sich in seiner unteren Position.

Als Bestandteil einer Keylock-Sperreinrichtung ist am Gehäuse 2 auf einer Drehachse B ein Sperrelement 5 drehbar gelagert. In der in Fig. 1 dargestellten Position blockiert ein Vorsprung 6 des Sperrelementes 5 die Bewegung eines weiteren Schwenkhebels und damit das Abziehen eines nicht gezeigten Zündschlüssels.

Um das Sperrelement 5 in der in Fig. 1 dargestellten Sperrstellung auch dann zu halten, wenn sich der Wählhebel 3 nicht in der Position P befindet, ist am Sperrelement 5 eine Verriegelungseinrichtung 16 vorgesehen.

Die Verriegelungseinrichtung 16 besteht aus einer Blattfeder 8, deren erstes Ende als Auge 17 ausgebildet und an einem Zapfen 9 des Sperrelementes 5 festgelegt ist. Durch Abwinkeln der Biegefeder 8 ist ein zweiter Schenkel 10 gebildet. Kurz vor dem zweiten Schenkel 10 liegt die Biegefeder 8 an einem am Sperrelement 5 angeformten Auflager 11 auf. Ein zweites Auflager 12 ist auf der anderen Seite der Biegefeder 8 versetzt in Richtung des Zapfens 9 vorgesehen und dient sowohl zur spielfreien Fixierung der Biegefeder 8 wie auch zum Abstützen von in dem zweiten Schenkel 10 eingeleiteten Kräften.

Im montierten Zustand der Biegefeder 8 stützt sich deren freies Ende 13 an einem Absatz 14 ab, der an einem Gehäuseteil 15 der Wähleinrichtung 1 radial zur Drehachse B des Sperrelementes 5 vorgesehen ist.

Zwischen dem zweiten Auflager 12 und den Zapfen 9 ist im Sperrelement 5 eine Nut 7 zur Aufnahme des Stiftes 4 vorgesehen. Dadurch, daß der Stift 4 bei einer Bewegung in die Nut 7 hinein zwischen dem ersten Auflager 11 und dem Zapfen 9 an der Biegefeder 8 angreift, wird die Biegefeder 8 durchgebogen und das freie Ende 13 gerät außer Eingriff mit dem Vorsprung 14. In der Darstellung nach Fig. 1, d.h. in der Position P des Wählhebels 3, befindet sich der Stift 4 bereits soweit in der Nut 7, daß die Biegefeder 8 genügend weit durchgebogen ist, damit sich das freie Ende 13 nicht mehr in Eingriff mit dem Absatz 14 befindet. Das Sperrelement 5 kann somit verschwenkt werden.

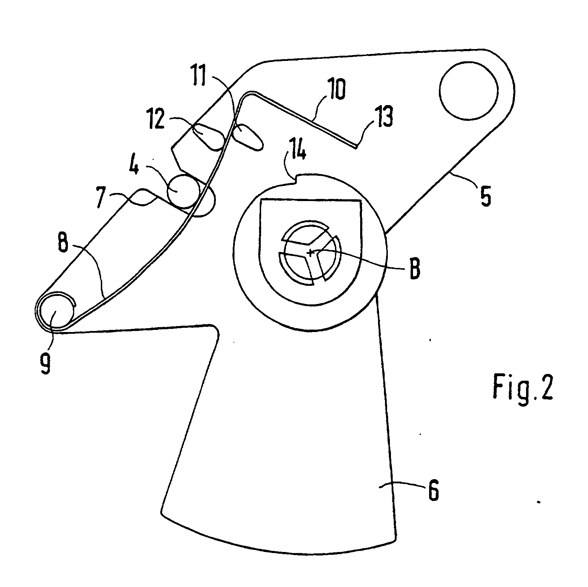

Für ein Verschwenken des Sperrelementes 5 in die in Fig. 2 dargestellte Position wird der Stift 4 in seine in Bezug auf den Wählhebel 3 obere Position gebracht. In dieser Position sperrt die nicht dargestellte Sperreinrichtung den Wählhebel 3. Da sich während dieser Bewegung der Stift 4 in Eingriff mit der Nut 7 befindet, erzwingt die Bewegung des Stiftes 4 eine Schwenkbewegung des Sperrelementes 5.

In der in Fig. 2 dargestellten Stellung des Sperrelementes 5 befindet sich der Vorsprung 6 nicht weiter in Eingriff mit dem weiteren, nicht dargestellten Sperrelement. Das weitere Sperrelement ist damit bewegbar und kann einen nicht gezeigten Zündschlüssel freigeben. Bei abgezogenem Zündschlüssel verhindert das zweite Sperrelement, daß der Vorsprung 6 in seine in Fig. 1 dargestellte Position zurückgeschwenkt werden kann. Dadurch ist auch der Stift 4 in seiner in Fig. 2 dargestellten Position gehalten und die Sperreinrichtung des Wählhebels 3 kann nicht entriegelt werden. Der Wählhebel 3 ist damit bei abgezogenem Zündschlüssel in seiner Position P gesperrt und kann nicht betätigt werden.

Die dargestellte Verriegelungseinrichtung 16 ist vorzugsweise wie dargestellt in einem Keylock-Verriegelungssystem verwendbar; sie kann jedoch auch für andere Sperrelemente an Schaltoder Wähleinrichtungen verwendet werden.

## Patentansprüche

1. Verriegelungseinrichtung (16) für ein drehbares Sperrelement (5) einer einen Wählhebel (3) aufweisenden Wähleinrichtung, wobei zur Verriegelung des Sperrelementes eine Biegefeder (8) verwendet ist und wobei ein Betätigungselement (4) des Wälhebels (3) Zur Entriegelung der Verriegelungseinrichtung dient, **dadurch gekennzeichnet, daß** die Biegefeder amSperrelement vorgesehen ist, wobei
■ ein erstes Ende der Biegefeder auf dem Sperrelement ortsfest gelagert ist,
■ die Biegefeder beabstandet zu ihrem zweiten, freien Ende (13) auf einem an dem Sperrelement angeordneten Auflager (11) aufliegt,
■ das zweite, freie Ende an einem Absatz (14) abgestützt ist, der an einem Gehäuse (2) der Wähleinrichtung radial zu einer Drehachse (B) des Sperrelementes vorgesehen ist und
■ das Betätigungselement (4) des Wählhebels zur Entriegelung der Verriegelungseinrichtung zwischen dem ortsfesten Lager (9) und dem Auflager (11) an der Biegefeder angreift.

2. Verriegelungseinrichtung nach Anspruch 1, **dadurch gekennzeichnet, daß** das orstfeste Lager (9) als Zapfen und das erste Ende der Biegefeder 8 als zum Zapfen korrespondierendes Auge ausgeführt ist.

3. Verriegelungseinrichtung nach Anspruch 1 oder 2, **dadurch gekennzeichnet, daß** das zweite, freie Ende (13) der Biegefeder (8) abgewinkelt und ein zweites Auflager (12) für die Biegefeder (8) vorgesehen ist.

4. Verriegelungseinrichtung nach Anspruch 1, 2 oder 3, **dadurch gekennzeichnet, daß** ein zweites Auflager (12) für die Biegefeder (8) vorgesehen, wobei das zweite Auflager in Richtung des ortsfesten Lagers beabstandet zum ersten Auflager (11) angeordnet ist.

5. Verriegelungseinrichtung nach Anspruch 1, 2 , 3 oder 4, **dadurch gekennzeichnet, daß** das Betätigungselement des Wählhebels ein Stift (4) ist, der mit einer Sperreinrichtung des Wählhebels verbunden ist und zur Aufnahme des Stiftes (4) im Sperrelement (5) eine Öffnung (7) vorgesehen ist, wobei sich die Öffnung im wesentlichen radial zur Drehachse vom Sperrelement erstreckt.

6. Verwendung einer Verriegelungseinrichtung (16) nach einem der vorstehenden Ansprüche für ein drehbares Sperrelement (5) eines Keylock-Systemes einer Schalt- oder Wähleinrichtung für ein Kraftfahrzeug.

## Claims

1. A locking device (16) for a rotatable locking member (5) of a selector device comprising a selector lever (3), wherein a flexural spring (8) is used for locking the locking member and wherein an actuating member (4) of the selector lever (3) is used for unlocking the locking device, **characterized in that** the flexural spring is provided on the locking member, wherein
■ a first end of the flexural spring is mounted in a stationary manner on the locking member,
■ the flexural spring rests - at a distance from the second free end (13) thereof - on a support (11) arranged on the locking member,
■ the second free end is supported on an offset (14) which is provided - radially to an axis of rotation (**B**) of the locking member - on a housing (2) of the selector device, and
■ in order to unlock the locking device, the actuating member (4) of the selector lever engages on the flexural spring between the stationary bearing (9) and the support (11).

2. A locking device according to Claim 1, **characterized in that** the stationary bearing (9) is constructed in the form of a pin and the first end of the flexural spring 8 is constructed in the form of a lug corresponding to the pin.

3. A locking device according to Claim 1 or 2, **characterized in that** the second free end (13) of the flexural spring (8) is angled, and a second support (12) is provided for the flexural spring (8).

4. A locking device according to Claim 1, 2 or 3, **characterized in that** a second support (12) is provided for the flexural spring (8), wherein the second support is arranged at a distance from the first support (11) in the direction of the stationary bearing.

5. A locking device according to Claim 1, 2, 3 or 4, **characterized in that** the actuating member of the selector lever is a pin (4) which is connected to a locking device of the selector lever, and an opening (7) is provided for receiving the pin (4) in the locking member (5), wherein the opening extends substantially radially with respect to the axis of

6. Use of a locking device (16) according to one of the preceding Claims for a rotatable locking member (5) of a keylock system of a gear-shift or selector device for a motor vehicle.

## Revendications

1. Dispositif de verrouillage (16) pour un élément de blocage (5) tournant d'un dispositif de sélection de vitesse, comportant un levier de sélection de vitesse (3), un ressort de flexion (8) étant utilisé pour verrouiller l'élément de blocage et un élément d'actionnement (4) du levier de sélection de vitesse (3) servant à déverrouiller le dispositif de verrouillage, **caractérisé en ce que** le ressort de flexion est prévu sur l'élément de blocage,
- une première extrémité du ressort de flexion étant montée fixement sur l'élément de blocage,
- le ressort de flexion reposant, à distance de sa deuxième extrémité libre (13), sur un appui (11) disposé sur l'élément de blocage,
- la deuxième extrémité libre prenant appui contre un épaulement (14) qui est prévu sur un boîtier (2) du dispositif de sélection de vitesse, radialement par rapport à un axe de rotation (B) de l'élément de blocage, et
- l'élément d'actionnement (4) du levier de sélection de vitesse agissant sur le ressort de flexion, entre le palier fixe (9) et le appui (11), en vue du déverrouillage du dispositif de verrouillage.

2. Dispositif de verrouillage selon la revendication 1, **caractérisé en ce que** le palier fixe (9) est réalisé sous la forme d'un tenon et la première extrémité du ressort de flexion (8) sous la forme d'un oeillet correspondant au tenon.

3. Dispositif de verrouillage selon la revendication 1 ou 2, **caractérisé en ce que** la deuxième extrémité libre (13) du ressort de flexion (8) est coudée et un deuxième appui (12) est prévu pour le ressort de flexion (8).

4. Dispositif de verrouillage selon la revendication 1, 2 ou 3, **caractérisé en ce qu'**un deuxième appui (12) est prévu pour le ressort de flexion (8), le deuxième appui étant disposé, dans la direction du palier fixe, à distance du premier appui (11).

5. Dispositif de verrouillage selon la revendication 1, 2, 3 ou 4, **caractérisé en ce que** l'élément d'actionnement du levier de sélection de vitesse est une broche (4) qui est reliée à un dispositif de blocage du levier de sélection de vitesse et, pour recevoir la broche (4), il est prévu dans l'élément de blocage (5) une ouverture (7), l'ouverture s'étendant sensiblement radialement par rapport à l'axe de rotation de l'élément de blocage.

6. Utilisation d'un dispositif de verrouillage (16) selon l'une des revendications précédentes pour un élément de blocage (5) tournant d'un système keylock d'un dispositif de changement de vitesse ou de sélection pour un véhicule automobile.
